# FASCICULE DE BREVET EUROPEEN

(11) **EP 3 228 016 B1**
(45) Date de publication et mention de la délivrance du brevet: **13.02.2019**
(21) Numéro de dépôt: 15817459.9
(22) Date de dépôt: 01.12.2015
(51) Int. Cl.: H04B 3/30, H04L 25/08, H04L 25/02, H04L 5/14, H04B 1/40, H02J 13/00

(54) **PROCÉDÉ ET DISPOSITIF D'ANNULATION DE BRUIT POUR LES SYSTÈMES DE TRANSMISSION BIFILAIRES**
VERFAHREN UND VORRICHTUNG ZUR GERÄUSCHUNTERDRÜCKUNG FÜR BIFILARE ÜBERTRAGUNGSSYSTEME
METHOD AND DEVICE FOR CANCELLING NOISE FOR BIFILAR TRANSMISSION SYSTEMS

(30) Priorité: 02.12.2014 FR 1461820
(43) Date de publication de la demande: 11.10.2017
(60) Demande divisionnaire: 18209211.4
(73) Titulaire: Orange, 75015 Paris (FR)
(72) Inventeur: TARAFI, Rabah, 22300 Lannion (FR); MOULIN, Fabienne, 22660 Trevou Treguignec (FR); CARIO, Alain, 22300 Lannion (FR)
(86) Numéro de dépôt international: PCT/FR2015/053290
(87) Numéro de publication internationale: WO 2016/087775

(56) Documents cités:
- WO-A1-01/50623
- US-A- 6 052 420
- US-A1- 2011 206 104

## Description

### 1. Domaine de l'invention

La demande d'invention se situe dans le domaine de l'annulation des bruits électromagnétiques pour les systèmes de transmission par une paire de fils de cuivre (téléphoniques ou électriques), dits bifilaires, et plus particulièrement les bruits couplés en mode commun, c'est-à-dire impactant la paire de fil prise dans son ensemble, et non les bruits couplés en mode différentiels, c'est-à-dire impactant un fil de la paire par rapport à l'autre.

### 2. Etat de la technique antérieure

Les systèmes de transmission bifilaires, par exemple les systèmes DSL (Digital Subscriber Line) ou PLT (Power Line Transmission), sont soumis à des perturbations électromagnétiques, qui dégradent la qualité de la transmission et donc celle des services (débits anormalement faibles, déconnexions intempestives, etc.).

Ces bruits, dont l'origine est une source externe à la paire de fils (équipements électrodomestiques, moteurs d'ascenseur, passages de train sur ligne électrifiée, alimentations défectueuses, etc.), se couplent en mode commun, c'est-à-dire entre les fils et la terre, se convertissent en un mode différentiel, c'est-à-dire entre chaque fil, et constituent une tension parasite superposée au signal utile également transmis en différentiel entre les deux fils.

La demande de brevet publiée US 2011/0206104 A1 enseigne une technique d'annulation du bruit mise en oeuvre dans un modem, basée sur l'utilisation de deux paires de fils connectées au même modem, et sur l'hypothèse que les deux paires sont soumises aux mêmes perturbations électromagnétiques. L'une des paires permet donc la mesure des bruits pour les soustraire dans le domaine temporel au signal reçu par l'autre paire, constitué du signal utile et du bruit.

Cette méthode présente au moins deux inconvénients majeurs. Elle nécessite l'utilisation de deux paires connectées au modem et ne peut donc pas être utilisée lorsqu'une seule paire arrive chez le client du service de télécommunication où se trouve le modem, ce qui est majoritairement le cas.

De plus l'hypothèse selon laquelle le bruit couplé sur les deux paires est identique est une approximation car chaque paire a sa propre conversion entre mode commun et mode différentiel. Le bruit soustrait à partir de la mesure sur une paire ne sera donc pas identique à celui présent sur la paire de transmission et superposé au signal utile.

Un des buts de l'invention est de remédier à ces inconvénients de l'état de la technique.

### 3. Exposé de l'invention

L'invention vient améliorer la situation à l'aide d'un procédé d'annulation d'un bruit présent dans un signal de données reçu sur une ligne bifilaire électrique, mis en oeuvre par un dispositif émetteur-récepteur comprenant :
- un premier transformateur, dit circuit de mode différentiel, comprenant un côté primaire et un côté secondaire, le côté primaire étant connecté par deux fils à la ligne bifilaire ;
- un deuxième transformateur, dit circuit de mode commun, comprenant un côté primaire et un côté secondaire, le côté primaire étant connecté par un fil au côté primaire du circuit de mode différentiel, et à une masse par un autre fil ;
le procédé comprenant les étapes suivantes lors d'une **phase de réglage** :
- obtention d'une première valeur de tension sur la ligne bifilaire, dite tension de mode différentiel ;
- obtention d'une deuxième valeur de tension correspondant à une tension au niveau des deux fils du côté secondaire du circuit de mode commun, dite tension image du mode commun, résultant de ladite tension de mode différentiel ;
- calcul du rapport entre la deuxième valeur et la première valeur, dit rapport de conversion du bruit ;
et le procédé comprenant les étapes suivantes lors d'une **phase d'annulation,** subséquente à la phase de réglage :
- réception du signal de données en provenance de la ligne bifilaire ;
- simultanément à la réception, obtention d'une troisième valeur de tension correspondant à la tension au niveau des deux fils du côté secondaire du circuit de mode commun ;
- annulation du bruit dans le signal de données, par soustraction d'une estimation du bruit, l'estimation étant calculée par division de la troisième valeur par ledit rapport de conversion.

La solution proposée par le procédé selon l'invention permet l'annulation du bruit à partir d'une seule paire de fils connectée au modem. Elle prend en compte le bruit réellement couplé sur la ligne bifilaire. Ce procédé se déroule en deux phases : une phase de réglage, durant laquelle aucune donnée dite utile n'est transmise sur la ligne bifilaire, et une phase d'annulation pendant laquelle la ligne bifilaire transmet des données utiles mais bruitées.

Durant la phase de réglage, la conversion mode commun / mode différentiel est évaluée, sur la base d'un bruit présent sur la ligne bifilaire.

Durant la phase d'annulation, le bruit de mode différentiel est calculé à partir de la conversion mode commun / mode différentiel estimée lors de la phase de réglage, et à partir d'une mesure de mode commun effectuée dynamiquement, c'est-à-dire pendant la transmission du signal utile bruité.

Selon un aspect de l'invention, les étapes d'obtention de la phase de réglage sont précédées des étapes suivantes:
- génération d'un signal de réglage connu, par le dispositif émetteur-récepteur ;
- émission du signal de réglage connu vers le circuit de mode différentiel ou vers le circuit de mode commun.

Lorsque le bruit ambiant présent dans la ligne bifilaire, c'est-à-dire le bruit en l'absence de transmission de données, est d'une intensité inférieure à un certain seuil, la phase de réglage peut avantageusement utiliser un bruit "artificiel", c'est-à-dire un signal de réglage généré spécialement par le dispositif émetteur-récepteur. Un avantage de cet aspect est que ce signal de réglage est généré exprès avec une valeur de tension prédéterminée, donc connue, et il n'est donc pas nécessaire de la mesurer. Un autre avantage est qu'il est possible d'effectuer la phase de réglage dans plusieurs bandes spectrales différentes, et ainsi calculer plusieurs rapports de conversion, chacun étant adapté à un spectre bien précis. L'annulation de bruit qui résulte de l'utilisation de ces différents rapports de conversion est plus précise.

Selon un aspect de l'invention, le signal de réglage connu est émis vers le circuit de mode différentiel.

La tension de ce signal de réglage connu correspond alors à la première valeur de tension, c'est-à-dire la tension de mode différentiel. Le signal de réglage est aussi émis sur la ligne bifilaire qui est dans l'alignement du circuit de mode différentiel.

Selon un aspect de l'invention, le signal de réglage connu est émis vers le circuit de mode commun.

La tension de ce signal de réglage connu correspond alors à la deuxième valeur de tension, c'est-à-dire la tension image du mode commun. Le signal de réglage n'est pas émis sur la ligne bifilaire qui n'est pas dans l'alignement du circuit de mode commun, ce qui est avantageux lorsque le signal de réglage risque de perturber la ligne bifilaire ou des équipements connectés à son extrémité distante.

De plus, cette méthode permet de réaliser la phase de réglage à toutes les fréquences nécessaires, quel que soit le niveau du bruit ambiant, aussi appelé bruit de mode commun, présent sur la ligne bifilaire. Son inconvénient est qu'elle nécessite un canal d'émission de signal vers le circuit de mode commun, ce qui n'est pas nécessaire si le signal de réglage est émis vers le circuit de mode différentiel.

Selon un aspect de l'invention, la première valeur est obtenue par mesure au niveau des deux fils d'un des côtés du circuit de mode différentiel, et où la deuxième valeur est obtenue par mesure au niveau des deux fils d'un des côtés du circuit de mode commun.

Lorsque le bruit ambiant, aussi appelé bruit de mode commun, présent dans la ligne bifilaire est d'une intensité suffisante, la phase de réglage peut avantageusement l'utiliser et en mesurer la tension dans le circuit de mode commun et également mesurer la tension résultante dans le circuit de mode différentiel. Il n'est pas nécessaire que le dispositif émetteur-récepteur soit capable de générer un signal de réglage spécial, et le dispositif s'en trouve simplifié.

Les différents aspects du procédé d'annulation de bruit qui viennent d'être décrits peuvent être mis en oeuvre indépendamment les uns des autres ou en combinaison les uns avec les autres.

L'invention concerne aussi un dispositif émetteur-récepteur apte à émettre et recevoir un signal électrique sur une ligne bifilaire, comprenant :
- un premier transformateur, dit circuit de mode différentiel, comprenant un côté primaire et un côté secondaire, le côté primaire étant connecté par deux fils à la ligne bifilaire ;
- un deuxième transformateur, dit circuit de mode commun, comprenant un côté primaire et un côté secondaire, le côté primaire étant connecté par un fil au côté primaire du circuit de mode différentiel, et à une masse par un autre fil ;
et comprenant en outre les modules suivants :
- module d'obtention d'une valeur de tension sur la ligne bifilaire, dite tension de mode différentiel ;
- module de mesure d'une valeur de tension correspondant à une tension au niveau des deux fils du côté secondaire du circuit de mode commun, dite tension image du mode commun, résultant de ladite tension de mode différentiel ;
- module de calcul du rapport entre la deuxième valeur et la première valeur, dit rapport de conversion du bruit ;
- module de réception d'un signal de données en provenance de la ligne bifilaire ;
- module d'annulation du bruit dans le signal de données, par soustraction d'une estimation du bruit, l'estimation étant calculée par division d'une valeur de tension image du mode commun par ledit rapport de conversion.

Le dispositif émetteur-récepteur selon l'invention est apte à mettre en oeuvre le procédé décrit plus haut, dans tous ses modes de réalisation. En particulier, le circuit de mode commun ne modifie pas la tension de mode différentiel obtenue au niveau du côté secondaire du premier transformateur et permet la mesure de la tension image du mode commun. Ce dispositif est destiné à être mis en oeuvre par exemple dans un modem xDSL.

Selon un aspect de l'invention, le côté primaire du circuit de mode commun est connecté par le fil au point milieu du côté primaire du circuit de mode différentiel.

Comme la plupart des transformateurs prévoient la possibilité d'une connexion électrique en leur point milieu, du côté primaire et du côté secondaire, aucun composant électronique additionnel n'est nécessaire pour connecter le circuit de mode commun au circuit de mode différentiel.

Selon un aspect de l'invention, le côté primaire du circuit de mode commun est connecté par le fil à un pont de résistances à hautes impédances, le pont étant connecté à chacun des deux fils du côté primaire du circuit de mode différentiel.

Cet aspect est une alternative lorsqu'une connexion au point milieu du circuit de mode différentiel n'est pas possible.

Selon un aspect de l'invention, le côté primaire du circuit de mode commun est connecté par le fil à une sonde de courant positionnée autour des deux fils du côté primaire du circuit de mode différentiel.

Cet aspect est une autre alternative lorsqu'une connexion au point milieu du circuit de mode différentiel n'est pas possible.

L'invention concerne aussi un programme d'ordinateur comprenant des instructions pour la mise en oeuvre des étapes du procédé d'annulation de bruit qui vient d'être décrit, lorsque ce programme est exécuté par un processeur.

L'invention concerne enfin un support d'enregistrement, lisible par un dispositif émetteur-récepteur d'un signal électrique tel que par exemple un modem xDSL, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un exemple de dispositif émetteur-récepteur mettant en oeuvre le procédé d'annulation d'un bruit présent dans un signal de données reçu sur une ligne bifilaire, selon l'invention,
- les figures 2a, 2b et 2c présentent un exemple de mise en oeuvre du circuit de mode différentiel compris dans le dispositif émetteur-récepteur, selon un premier, un deuxième et un troisième mode de réalisation de la connexion entre le circuit de mode commun et le circuit de mode différentiel, selon l'invention,
- la figure 3 présente de façon schématique un exemple de mise en oeuvre des étapes du procédé d'annulation d'un bruit présent dans un signal de données reçu sur une ligne bifilaire électrique, selon un aspect de l'invention.
- la figure 4 présente un exemple de structure du dispositif émetteur-récepteur, selon un aspect de l'invention.

### 5. Description détaillée d'au moins un mode de réalisation de l'invention

Dans la suite de la description, on présente des exemples de plusieurs modes de réalisation de l'invention se basant sur un système de transmission bifilaire DSL, mais l'invention s'applique également à d'autres systèmes, tel qu'un système PLT.

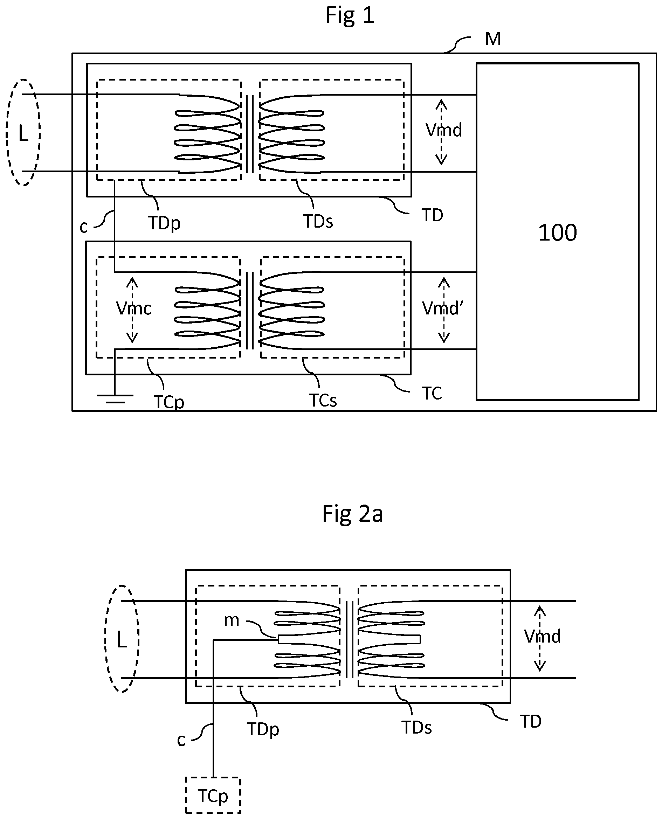

La **figure 1** présente de façon schématique un exemple de dispositif émetteur-récepteur mettant en oeuvre le procédé d'annulation d'un bruit présent dans un signal de données reçu sur une ligne bifilaire, selon l'invention.

Le dispositif M, qui peut être un modem, comprend un premier transformateur de courant TD, et un deuxième transformateur de courant TC. Chacun de ces transformateurs est relié à une unité de traitement 100, aussi appelée "chipset", également comprise dans le modem M.

Comme tout transformateur, le premier transformateur TD comprend un côté primaire TDp et un côté secondaire TDs, isolés galvaniquement entre eux. Cette isolation permet de protéger le côté secondaire TDs, relié au chipset 100, de toute surtension affectant le côté primaire TDp, en particulier au travers de la ligne bifilaire L à laquelle est relié à le côté primaire TDp du premier transformateur TD.

De même, le second transformateur TC comprend un côté primaire TCp et un côté secondaire TCs, isolés galvaniquement entre eux afin de protéger le côté secondaire TCs, également relié au chipset 100, de toute surtension pouvant affecter le côté primaire TCp, au travers du côté primaire TDp du premier transformateur TD, auquel est relié le côté primaire TCp du second transformateur TC, par la connexion c.

Lorsqu'une tension existe entre les deux fils du côté primaire d'un transformateur, une tension proportionnelle est induite entre les deux fils du côté secondaire, et vice versa.

Ainsi, lorsqu'une différence de tension existe entre les deux fils de la ligne bifilaire L, une tension Vmd, dite tension de mode différentiel, est induite entre les deux fils du côté secondaire TDs du premier transformateur TD. C'est pourquoi le premier transformateur TD est aussi appelé "circuit de mode différentiel".

Grâce à la connexion c entre le second transformateur TC et le premier transformateur TD, lorsqu'une tension Vmc, dite tension de mode commun, existe entre la masse et le premier transformateur TD, cela se traduit par une tension Vmd' au niveau du côté secondaire TCs du second transformateur TC. C'est pourquoi le second transformateur TC est aussi appelé "circuit de mode commun".

On comprend que grâce à la disposition, dans le modem M, du circuit de mode différentiel TD, du circuit de mode commun TC et du chipset 100, les tensions Vmd et Vmd' peuvent être mesurées à tout moment par le chipset 100.

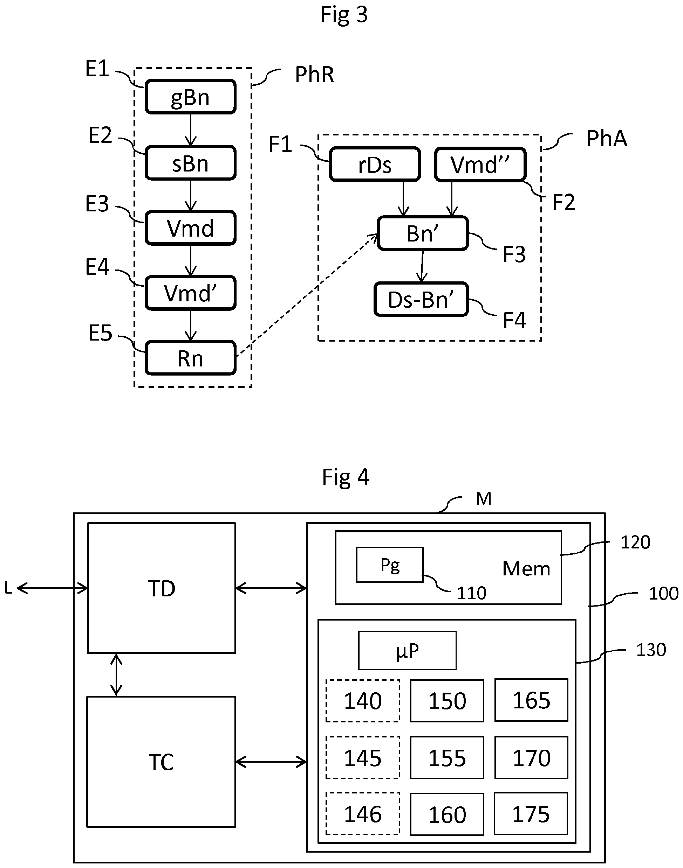

Afin que le modem M puisse recevoir et émettre des signaux sur la ligne bifilaire L, le chipset 100 comprend un module de réception et un module d'émission, connectés au circuit de mode différentiel TD. Afin de pouvoir mesurer un bruit en mode commun, le chipset comprend également un module de réception connecté au circuit de mode commun TC. Le chipset 100 comprend également d'autres modules qui seront décrits en relation avec la figure 4.

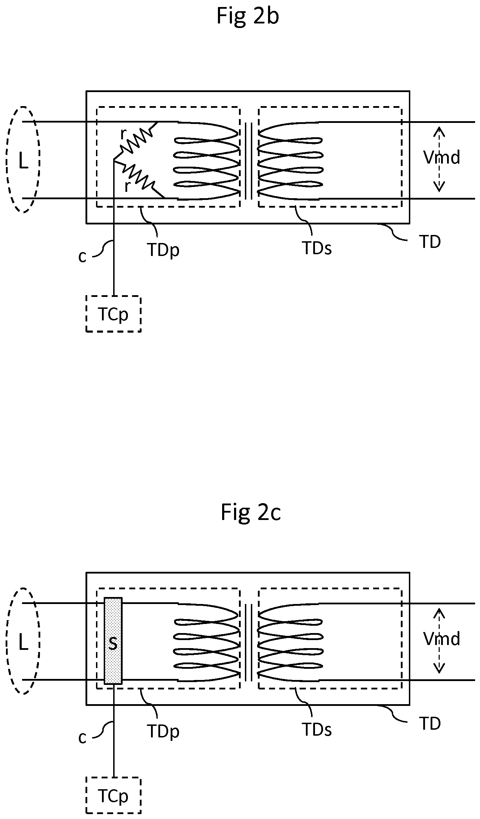

Les **figures 2a****,** **2b et 2c** présentent un exemple de mise en oeuvre du circuit de mode différentiel compris dans le dispositif émetteur-récepteur, selon un premier, un deuxième et un troisième mode de réalisation de la connexion entre le circuit de mode commun et le circuit de mode différentiel, selon l'invention.

Tel qu'illustré par la **figure 2a****,** dans le premier mode de réalisation, le côté primaire TCp du circuit de mode commun TC est connecté par le fil c, c'est-à-dire le fil qui n'est pas connecté à la masse, au point milieu du côté primaire TDp du circuit de mode différentiel TD.

L'avantage de ce mode est qu'aucun composant électronique additionnel n'est nécessaire pour connecter le circuit de mode commun au circuit de mode différentiel. Une simple connexion électrique suffit.

Tel qu'illustré par la **figure 2b****,** dans le deuxième mode de réalisation, le côté primaire TCp du circuit de mode commun TC est connecté par le fil c à un pont de résistances à hautes impédances, chaque résistance r étant par exemple de l'ordre de 10 kOhms, le pont étant connecté à chacun des deux fils du côté primaire TDp du circuit de mode différentiel TD.

Ceci est une alternative lorsqu'il n'est pas possible de connecter le point milieu du côté primaire TDp du circuit de mode différentiel TD.

Tel qu'illustré par la **figure 2c****,** dans le troisième mode de réalisation, le côté primaire TCp du circuit de mode commun TC est connecté par le fil c à une sonde de courant s, positionnée autour des deux fils du côté primaire TDp du circuit de mode différentiel TD.

Ceci est une autre alternative lorsqu'il n'est pas possible de connecter le point milieu du côté primaire TDp du circuit de mode différentiel TD.

La **figure 3** présente de façon schématique un exemple de mise en oeuvre des étapes du procédé d'annulation d'un bruit présent dans un signal de données reçu sur une ligne bifilaire électrique, selon un aspect de l'invention.

Le procédé comprend deux phases séparées temporellement: une phase de réglage PhR, pendant laquelle est calculé un rapport de conversion, et une phase d'annulation de bruit PhA proprement dite, utilisant le rapport de conversion calculé pour estimer le bruit à soustraire d'un signal de données reçu.

La **phase de réglage PhR** peut être exécutée selon plusieurs modes de réalisation.

Dans un **premier mode de réalisation du procédé** d'annulation de bruit selon l'invention, la phase de réglage PhR comprend les étapes E1 à E5.

Lors d'une étape E1, le chipset 100 du modem génère un signal de réglage Bn avec une énergie et dans une bande de fréquence qui sont connues.

Lors d'une étape E2, le signal de réglage Bn connu est émis depuis le chipset 100 vers le circuit de mode différentiel TD, et donc vers la ligne bifilaire L. Ce signal de réglage ne doit donc pas présenter, pour la ligne bifilaire L et les équipements qui lui sont connectés à l'extrémité distance, de perturbation qui pourrait gêner la fourniture de services à des utilisateurs.

Lors d'une étape E3, une valeur de tension sur la ligne bifilaire, dite tension de mode différentiel Vmd, est obtenue, par simple connaissance du signal de réglage Bn par le chipset 100 qui l'a émis. Alternativement, la valeur peut être obtenue par mesure de cette tension entre les deux fils du côté secondaire TDs du circuit de mode différentiel TD. La continuité électrique de ces fils se prolongeant jusque dans le chipset 100, la mesure peut également être effectuée au niveau du chipset 100.

De cette tension de mode différentiel Vmd résulte une tension au niveau des deux fils du côté secondaire TCs du circuit de mode commun TC, dite tension image du mode commun Vmd'.

Lors d'une étape E4, la valeur de la tension image du mode commun Vmd' est obtenue. La continuité électrique des fils du côté secondaire TCs se prolongeant jusque dans le chipset 100, cette obtention peut être réalisée par la mesure de la tension entre ces fils au niveau du chipset 100.

Lors d'une étape E5, le rapport est calculé entre la deuxième valeur, c'est-à-dire la tension image de mode commun Vmd', et la première valeur, c'est-à-dire la tension de mode différentiel Vmd. Ce rapport est dit rapport de conversion du bruit Rn.

Dans un **deuxième mode de réalisation du procédé** d'annulation de bruit selon l'invention, les étapes E1 et E2 ne sont pas exécutées. Si un bruit ambiant Ba existe naturellement sur la ligne bifilaire L, il peut être suffisamment énergique pour rendre inutile, voire impossible, la génération d'un signal de réglage Bn par le chipset, dans les bandes de fréquence utilisées. Dans ce cas la valeur de la tension de mode différentiel Vmd de l'étape E3 est obtenue par mesure de la tension entre les deux fils du côté secondaire TDs du circuit de mode différentiel TD. Les étapes E4 et E5 sont exécutées de façon identique au premier mode de réalisation du procédé. L'énergie du bruit ambiant Ba peut être mesurée périodiquement par le chipset qui décide l'exécution ou non des étapes E1 et E2 en fonction d'un dépassement de seuil.

Il est possible et avantageux, dans certains cas, de combiner le premier avec le deuxième mode de réalisation du procédé d'annulation de bruit. En effet, les caractéristiques du bruit ambiant sont aléatoires et le bruit ambiant ne présente pas forcément de l'énergie suffisante dans toutes les bandes de fréquences utilisées, pour lesquelles le rapport de conversion du bruit Rn ne pourra donc pas être estimé avec fiabilité. L'exécution du procédé selon le premier mode avec un signal de réglage Bn dans ces bandes de fréquences, en complément du deuxième mode utilisant le bruit ambiant Ba, peut alors pallier à cette lacune.

Dans un **troisième mode de réalisation du procédé** d'annulation de bruit selon l'invention, le signal de réglage Bn est émis depuis le chipset 100 vers le circuit de mode commun TC, et non vers le circuit de mode différentiel TD. Cela peut être avantageux s'il faut éviter que le signal de réglage Bn soit émis sur la ligne bifilaire L, ou lorsque le bruit ambiant Ba déjà présent sur la ligne est inutilisable par le deuxième mode de réalisation du procédé, par exemple parce qu'il est trop aléatoire.

Ce troisième mode nécessite que le chipset 100 comprenne un module d'émission, connecté au circuit de mode commun TC, en plus du module de réception déjà mentionné, afin que le signal de réglage Bn puisse être émis du chipset 100 vers le circuit de mode commun TC.

Dans cette variante les étapes E2, E3 et E4 sont remplacées respectivement par des étapes E2', E3' et E4'.

Lors de l'étape E2', le signal de réglage Bn est émis depuis le chipset 100 vers le circuit de mode commun TC.

De ce signal de réglage Bn résulte une tension au niveau des deux fils du côté secondaire TDs du circuit de mode différentiel TD, dite tension de mode différentiel Vmd.

Lors d'une étape E3', une valeur de tension sur la ligne bifilaire, dite tension de mode différentiel Vmd, est obtenue, par mesure de cette tension entre les deux fils du côté secondaire TDs du circuit de mode différentiel TD. La continuité électrique de ces fils se prolongeant jusque dans le chipset 100, la mesure peut également être effectuée au niveau du chipset 100.

Lors d'une étape E4', la valeur de la tension image du mode commun Vmd' est obtenue, par simple connaissance du signal de réglage Bn par le chipset 100 qui l'a émis. Alternativement, la valeur peut être obtenue par mesure de cette tension entre les deux fils du côté secondaire TCs du circuit de mode différentiel TC. La continuité électrique des fils du côté secondaire TCs se prolongeant jusque dans le chipset 100, cette mesure peut être réalisée au niveau du chipset 100.

Dans le premier et le deuxième mode de réalisation décrits ci-dessus, l'ensemble des étapes est répété itérativement autant de fois qu'il y a de bandes fréquentielles utilisées dans les signaux de données transmis sur la ligne L. A chaque bande fréquentielle correspond un signal de réglage Bn, et un rapport de conversion du bruit Rn, avec n variant de 1 au nombre de bandes fréquentielles.

La **phase d'annulation de bruit PhA** comprend les étapes F1 à F4, et utilise les mêmes bandes fréquentielles de signal de réglage Bn et les mêmes rapports de conversion de bruit Rn que la phase de réglage précédant immédiatement la phase d'annulation de bruit.

Lors d'une étape F1, un signal de données est reçu par le modem M en provenance de la ligne bifilaire L. Ce signal passe au travers du circuit de mode différentiel TD pour arriver dans le chipset 100.

Lors d'une étape F2 qui est simultanée à l'étape F1, une valeur de la tension image de mode commun Vmd" est obtenue par mesure de cette tension entre les deux fils du côté secondaire TCs du circuit de mode commun TC. La continuité électrique de ces fils se prolongeant jusque dans le chipset 100, la mesure peut également être effectuée au niveau du chipset 100.

Lors d'une étape F3, un bruit Bn' est estimé en divisant la tension Vmd" par le rapport de conversion Rn.

Enfin, lors d'une étape F4, le bruit dans le signal de données reçu est annulé par soustraction du bruit Bn' estimé.

On comprend que le bon fonctionnement de la phase d'annulation de bruit, c'est-à-dire l'absence de bruit dans le signal de données reçu après exécution du procédé, dépend de la qualité du rapport de conversion Rn calculé durant la phase de réglage. La phase de réglage doit donc être répétée si les conditions d'environnement électromagnétique de la ligne changent, et surtout si la ligne devient instable, c'est-à-dire si des erreurs de transmission ou des pertes de synchronisation se produisent, ou si aucun signal de données n'est reçu pendant une période anormalement longue. La façon de détecter ces phénomènes est connue.

En relation avec la **figure 4****,** on présente maintenant un exemple de structure du dispositif émetteur-récepteur, selon un aspect de l'invention.

Le dispositif émetteur-récepteur M, ou modem M, met en oeuvre le procédé d'annulation de bruit, dont différents modes de réalisation viennent d'être décrits. Un tel modem M peut être par exemple être un modem xDSL fonctionnant pour un système de transmission bifilaire utilisant tout type de technique DSL (ADSL, VDSL, etc.).

La figure 1 a déjà montré que le modem M comprend un circuit de mode différentiel TD, un circuit de mode commun TC, et une unité de traitement 100, ou chipset 100, ainsi que la façon dont ces composants peuvent être connectés entre eux à l'intérieur du modem M.

Par exemple, le chipset 100 comprend une unité de traitement 130, équipée par exemple d'un microprocesseur µP, et pilotée par un programme d'ordinateur 110, stocké dans une mémoire 120 et mettant en oeuvre le procédé d'annulation de bruit selon l'invention. A l'initialisation, les instructions de code du programme d'ordinateur 110 sont par exemple chargées dans une mémoire RAM, avant d'être exécutées par le processeur de l'unité de traitement 130.

Un tel chipset 100 comprend :
- un module 150 d'obtention, apte à obtenir une valeur de tension sur la ligne bifilaire L, correspondant à une tension au niveau des deux fils du côté secondaire TDs du circuit de mode différentiel TD, dite tension de mode différentiel Vmd;
- un module 155 d'obtention, apte à obtenir une valeur de tension correspondant à une tension au niveau des deux fils du côté secondaire TCs du circuit de mode commun TC, dite tension image du mode commun, Vmd' ou Vmd" ;
- un module 160 de calcul, apte à calculer un rapport entre la valeur de la tension image de mode commun Vmd', et la valeur de la tension de mode différentiel Vmd, ce rapport étant dit rapport de conversion Rn ;
- un module 165 de réception, apte à recevoir un signal de données en provenance de la ligne bifilaire L, au travers du circuit de mode différentiel TD ;
- un module 170 d'estimation de bruit, apte à estimer un bruit Bn' en calculant une division d'une valeur de la tension image de mode commun Vmd" par le rapport de conversion Rn ;
- module 175 d'annulation de bruit, apte à annuler le bruit dans le signal de données en lui soustrayant l'estimation du bruit Bn'.

Avantageusement, le chipset 100 peut aussi comprendre:
- un module 140 de génération de signal, apte à générer un signal de réglage Bn de caractéristiques prédéterminées et connues ;
- un module 145 d'émission du signal de réglage, apte à émettre le signal de réglage Bn vers le circuit de mode différentiel TD ;
- un module 146 d'émission du signal de réglage, apte à émettre le signal de réglage Bn vers le circuit de mode commun TD.

Les modules décrits en relation avec la figure 4 peuvent être des modules matériels ou logiciels.

Les exemples de réalisation de l'invention qui viennent d'être présentés ne sont que quelques-uns des modes de réalisation envisageables.

## Revendications

1. **Procédé** d'annulation d'un bruit présent dans un signal de données reçu sur une ligne bifilaire électrique (L), mis en oeuvre par un dispositif émetteur-récepteur (M) comprenant :
• un premier transformateur (TD), dit circuit de mode différentiel, comprenant un côté primaire (TDp) et un côté secondaire (TDs), le côté primaire étant connecté par deux fils à la ligne bifilaire ;
• un deuxième transformateur (TC), dit circuit de mode commun, comprenant un côté primaire (TCp) et un côté secondaire (TCs), le côté primaire étant connecté par un fil (c) au côté primaire (TDp) du circuit de mode différentiel, et à une masse par un autre fil ;
le procédé comprenant les étapes suivantes lors d'une **phase de réglage** (PhR):
• obtention (E3) d'une première valeur de tension (Vmd) sur la ligne bifilaire, dite tension de mode différentiel ;
• obtention (E4) d'une deuxième valeur de tension (Vmd') correspondant à une tension au niveau des deux fils du côté secondaire du circuit de mode commun, dite tension image du mode commun, résultant de ladite tension de mode différentiel ;
• calcul (E5) du rapport (Rn) entre la deuxième valeur et la première valeur, dit rapport de conversion du bruit ;
et le procédé comprenant les étapes suivantes lors d'une **phase d'annulation** (PhA), subséquente à la phase de réglage :
• réception (F1) du signal de données en provenance de la ligne bifilaire ;
• simultanément à la réception, obtention (F2) d'une troisième valeur de tension (Vmd") correspondant à la tension au niveau des deux fils du côté secondaire du circuit de mode commun ;
• annulation (F3, F4) du bruit dans le signal de données, par soustraction (F4) d'une estimation du bruit (Bn'), l'estimation étant calculée par division (F3) de la troisième valeur par ledit rapport de conversion.

2. **Procédé** d'annulation selon la revendication 1, où les étapes d'obtention (E3, E4) de la phase de réglage sont précédées des étapes suivantes:
• génération (E1) d'un signal de réglage connu (Bn), par le dispositif émetteur-récepteur ;
• émission (E2) du signal de réglage connu vers le circuit de mode différentiel (TD) ou vers le circuit de mode commun (TC).

3. **Procédé** d'annulation selon la revendication 2, où le signal de réglage connu (Bn) est émis vers le circuit de mode différentiel (TD).

4. **Procédé** d'annulation selon la revendication 2, où le signal de réglage connu (Bn) est émis vers le circuit de mode commun (TC).

5. **Procédé** d'annulation selon la revendication 1, où la première valeur (Vmd) est obtenue par mesure au niveau des deux fils d'un des côtés (TDp, TDs) du circuit de mode différentiel (TD), et où la deuxième valeur (Vmd') est obtenue par mesure au niveau des deux fils d'un des côtés (TCp, TCs) du circuit de mode commun (TC).

6. **Dispositif émetteur-récepteur** apte à émettre et recevoir un signal électrique sur une ligne bifilaire (L), comprenant :
• un premier transformateur (TD), dit circuit de mode différentiel, comprenant un côté primaire (TDp) et un côté secondaire (TDs), le côté primaire étant connecté par deux fils à la ligne bifilaire ;
• un deuxième transformateur (TC), dit circuit de mode commun, comprenant un côté primaire (TCp) et un côté secondaire (TCs), le côté primaire étant connecté par un fil (c) au côté primaire (TDp) du circuit de mode différentiel, et à une masse par un autre fil ;
comprenant en outre les modules suivants :
• module (150) d'obtention d'une valeur de tension (Vmd) sur la ligne bifilaire, dite tension de mode différentiel ;
• module (155) d'obtention d'une valeur de tension (Vmd', Vmd") correspondant à une tension au niveau des deux fils du côté secondaire du circuit de mode commun, dite tension image du mode commun ;
• module (160) de calcul du rapport (Rn) entre la tension image du mode commun et la tension de mode différentiel, dit rapport de conversion du bruit ;
• module (165) de réception d'un signal de données en provenance de la ligne bifilaire ;
• module (170, 175) d'annulation du bruit dans le signal de données, par soustraction d'une estimation du bruit, l'estimation étant calculée par division d'une valeur (Vmd") de tension image du mode commun par ledit rapport de conversion (Rn).

7. **Dispositif émetteur-récepteur** selon la revendication 6, où le côté primaire (TCp) du circuit de mode commun est connecté par le fil (c) au point milieu (m) du côté primaire (TDp) du circuit de mode différentiel.

8. **Dispositif émetteur-récepteur** selon la revendication 6, où le côté primaire (TCp) du circuit de mode commun est connecté par le fil (c) à un pont de résistances (r) à hautes impédances, le pont étant connecté à chacun des deux fils du côté primaire (TDp) du circuit de mode différentiel.

9. **Dispositif émetteur-récepteur** selon la revendication 6, où le côté primaire (TCp) du circuit de mode commun est connecté par le fil (c) à une sonde (s) de courant positionnée autour des deux fils du côté primaire (TDp) du circuit de mode différentiel.

10. **Programme d'ordinateur, caractérisé en ce qu'**il comprend des instructions pour la mise en oeuvre des étapes du procédé d'annulation de bruit selon la revendication 1, lorsque ce programme est exécuté par un processeur.

11. **Support d'enregistrement** lisible par un dispositif émetteur-récepteur d'un signal électrique, sur lequel est enregistré le programme selon la revendication 10.

## Patentansprüche

1. Verfahren zur Unterdrückung eines Geräusches, das in einem Datensignal vorhanden ist, das auf einer elektrischen bifilaren Leitung (L) empfangen wird, eingesetzt durch eine Sende-Empfangs-Vorrichtung (M), umfassend:
• einen ersten Transformator (TD), Differenzmodus-Schaltung genannt, umfassend eine primäre Seite (TDp) und eine sekundäre Seite (TDs), wobei die primäre Seite mit zwei Drähten an die bifilare Leitung angeschlossen ist;
• einen zweiten Transformator (TC), Gleichtaktschaltung genannt, umfassend eine primäre Seite (TCp) und eine sekundäre Seite (TCs), wobei die primäre Seite durch einen Draht (c) an die primäre Seite (TDp) der Differenzmodus-Schaltung und an eine Masse durch einen weiteren Draht angeschlossen ist;
wobei das Verfahren die folgenden Schritte während einer Einstellungsphase (PhR) umfasst:
• Erhalt (E3) eines ersten Spannungswerts (Vmd) auf der bifilaren Leitung, Differenzmodus-Spannung genannt;
• Erhalt (E4) eines zweiten Spannungswerts (Vmd') entsprechend einer Spannung im Bereich der zwei Drähte auf der sekundären Seite der Gleichtaktschaltung, Gleichtakt-Bildspannung genannt, resultierend aus der Differenzmodus-Spannung;
• Berechnung (E5) des Verhältnisses (Rn) zwischen dem zweiten Wert und dem ersten Wert, Umwandlungsverhältnis des Geräusches genannt;
und wobei das Verfahren die folgenden Schritte während einer Unterdrückungsphase (PhA) im Anschluss an die Einstellungsphase umfasst:
• Empfang (F1) des Datensignals von der bifilaren Leitung;
• gleichzeitig mit dem Empfang Erhalt (F2) eines dritten Spannungswerts (Vmd") entsprechend der Spannung im Bereich der zwei Drähte auf der sekundären Seite der Gleichtaktschaltung;
• Unterdrückung (F3, F4) des Geräusches in dem Datensignal durch Subtraktion (F4) einer Schätzung des Geräusches (Bn'), wobei die Schätzung durch Division (F3) des dritten Werts durch das Umwandlungsverhältnis berechnet wird.

2. Unterdrückungsverfahren nach Anspruch 1, bei dem den Schritten des Erhalts (E3, E4) der Einstellungsphase die folgenden Schritte vorangestellt sind:
• Erzeugung (E1) eines bekannten Einstellungssignals (Bn) durch die Sende-Empfangs-Vorrichtung;
• Senden (E2) des bekannten Einstellungssignals zu der Differenzmodus-Schaltung (TD) oder zu der Gleichtaktschaltung (TC).

3. Unterdrückungsverfahren nach Anspruch 2, bei dem das bekannte Einstellungssignal (Bn) zu der Differenzmodus-Schaltung (TD) gesandt wird.

4. Unterdrückungsverfahren nach Anspruch 2, bei dem das bekannte Einstellungssignal (Bn) zu der Gleichtaktschaltung (TC) gesandt wird.

5. Unterdrückungsverfahren nach Anspruch 1, bei dem der erste Wert (Vmd) durch Messen im Beriech der zwei Drähte einer der Seiten (TDp, TDs) der Differenzmodus-Schaltung (TD) erhalten wird, und bei dem der zweite Wert (Vmd') durch Messen im Bereich der zwei Drähte einer der Seiten (TCp, TCs) der Gleichtaktschaltung (TC) erhalten wird.

6. Sende-Empfangs-Vorrichtung, die geeignet ist, ein elektrisches Signal auf einer bifilaren Leitung (L) zu senden und zu empfangen, umfassend:
• einen ersten Transformator (TD), Differenzmodus-Schaltung genannt, umfassend eine primäre Seite (TDp) und eine sekundäre Seite (TDs), wobei die primäre Seite mit zwei Drähten an die bifilare Leitung angeschlossen ist;
• einen zweiten Transformator (TC), Gleichtaktschaltung genannt, umfassend eine primäre Seite (TCp) und eine sekundäre Seite (TCs), wobei die primäre Seite durch einen Draht (c) an die primäre Seite (TDp) der Differenzmodus-Schaltung und an eine Masse durch einen weiteren Draht angeschlossen ist;
ferner umfassend die folgenden Module:
• Modul (150) zum Erhalt eines Spannungswerts (Vmd) auf der bifilaren Leitung, Differenzmodus-Spannung genannt;
• Modul (155) zum Erhalt eines Spannungswerts (Vmd', Vmd") entsprechend einer Spannung im Bereich der zwei Drähte auf der sekundären Seite der Gleichtaktschaltung, Gleichtakt-Bildspannung genannt;
• Modul (160) zur Berechnung des Verhältnisses (Rn) zwischen der Gleichtakt-Bildspannung und der Differenzmodus-Spannung, Umwandlungsverhältnis des Geräusches genannt;
• Modul (165) zum Empfang eines Datensignals von der bifilaren Leitung;
• Modul (170, 175) zur Unterdrückung des Geräusches in dem Datensignal durch Subtraktion einer Schätzung des Geräusches, wobei die Schätzung durch Division eines Werts (Vmd") einer Gleichtakt-Bildspannung durch das Umwandlungsverhältnis (Rn) berechnet wird.

7. Sende-Empfangs-Vorrichtung nach Anspruch 6, wobei die primäre Seite (TCp) der Gleichtaktschaltung durch den Draht (c) an den Mittelpunkt (m) der primären Seite (TDp) der Differenzmodus-Schaltung angeschlossen ist.

8. Sende-Empfangs-Vorrichtung nach Anspruch 6, wobei die primäre Seite (TCp) der Gleichtaktschaltung durch den Draht (c) an eine Widerstandsbrücke (r) hoher Impedanz angeschlossen ist, wobei die Brücke an jeden der zwei Drähte auf der primären Seite (TDp) der Differenzmodus-Schaltung angeschlossen ist.

9. Sende-Empfangs-Vorrichtung nach Anspruch 6, wobei die primäre Seite (TCp) der Gleichtaktschaltung durch den Draht (c) an eine Stromsonde (s) angeschlossen ist, die um die zwei Drähte auf der primären Seite (TDp) der Differenzmodus-Schaltung positioniert ist.

10. Computerprogramm, **dadurch gekennzeichnet, dass** es Anweisungen für den Einsatz der Schritte des Verfahrens zur Geräuschunterdrückung nach Anspruch 1 umfass, wenn dieses Program von einem Prozessor ausgeführt wird.

11. Aufzeichnungsträger, der von einer Sende-Empfangs-Vorrichtung eines elektrischen Signals lesbar ist, auf dem das Programm nach Anspruch 10 aufgezeichnet ist.

## Claims

1. **Method** of canceling a noise present in a data signal received on an electric 2-wire line (L), implemented by a transceiver device (M) including:
• a first transformer (TD), called a differential mode circuit, including a primary side (TDp) and a secondary side (TDs), the primary side being connected by two wires to the 2-wire line;
• a second transformer (TC), called a common mode circuit, including a primary side (TCp) and a secondary side (TCs), the primary side being connected by a wire (c) to the primary side (TDp) of the differential mode circuit, and to a ground by another wire;
the method including the following steps during an **adjustment stage** (PhR):
• obtaining (E3) a first voltage value (Vmd) on the 2-wire line, called a differential mode voltage;
• obtaining (E4) a second voltage value (Vmd') corresponding to a voltage at the two wires of the secondary side of the common mode circuit, called a common mode image voltage, resulting from said differential mode voltage;
• calculating (E5) the ratio (Rn) between the second value and the first value, called a noise conversion ratio;
and the method including the following steps during a **cancellation stage** (PhA), subsequent to the adjustment stage:
• receiving (F1) the data signal from the 2-wire line;
• at the same time as the receiving step, obtaining (F2) a third voltage value (Vmd") corresponding to the voltage at the two wires of the secondary side of the common mode circuit;
• canceling (F3, F4) the noise in the data signal, by subtracting (F4) an estimate of the noise (Bn'), the estimate being calculated by dividing (F3) the third value by said conversion ratio.

2. **Method** of cancellation according to Claim 1, wherein the steps of obtaining (E3, E4), in the adjustment stage, are preceded by the following steps:
• generating (E1) a known adjustment signal (Bn), via the transceiver device;
• sending (E2) the known adjustment signal to the differential mode circuit (TD) or to the common mode circuit (TC).

3. **Method** of cancellation according to Claim 2, wherein the known adjustment signal (Bn) is sent to the differential mode circuit (TD).

4. **Method** of cancellation according to Claim 2, wherein the known adjustment signal (Bn) is sent to the common mode circuit (TC).

5. **Method** of cancellation according to Claim 1, wherein the first value (Vmd) is obtained by measuring at the two wires of one of the sides (TDp, TDs) of the differential mode circuit (TD), and wherein the second value (Vmd') is obtained by measuring at the two wires of one of the sides (TCp, TCs) of the common mode circuit (TC).

6. **Transceiver device** capable of sending and receiving an electrical signal on a 2-wire line (L), including:
• a first transformer (TD), called a differential mode circuit, including a primary side (TDp) and a secondary side (TDs), the primary side being connected by two wires to the 2-wire line;
• a second transformer (TC), called a common mode circuit, including a primary side (TCp) and a secondary side (TCs), the primary side being connected by a wire (c) to the primary side (TDp) of the differential mode circuit, and to a ground by another wire;
further including the following modules:
• module (150) for obtaining a voltage value (Vmd) on the 2-wire line, called a differential mode voltage;
• module (155) for obtaining a voltage value (Vmd', Vmd") corresponding to a voltage at the two wires of the secondary side of the common mode circuit, called a common mode image voltage;
• module (160) for calculating the ratio (Rn) between the common mode image voltage and the differential mode voltage, called a noise conversion ratio;
• module (165) for receiving a data signal from the 2-wire line;
• module (170, 175) for canceling the noise in the data signal, by subtracting an estimate of the noise, the estimate being calculated by dividing a common mode image voltage value (Vmd") by said conversion ratio (Rn).

7. **Transceiver device** according to Claim 6, wherein the primary side (TCp) of the common mode circuit is connected by the wire (c) to the midpoint (m) of the primary side (TDp) of the differential mode circuit.

8. **Transceiver device** according to Claim 6, wherein the primary side (TCp) of the common mode circuit is connected by the wire (c) to a bridge of high impedance resistors (r), the bridge being connected to each of the two wires of the primary side (TDp) of the differential mode circuit.

9. **Transceiver device** according to Claim 6, wherein the primary side (TCp) of the common mode circuit is connected by the wire (c) to a current probe (s) positioned around the two wires of the primary side (TDp) of the differential mode circuit.

10. **Computer program, characterized in that** it includes instructions for implementing the steps of the noise cancellation method according to Claim 1, when this program is executed by a processor.

11. **Recording medium** that can be read by a transceiver device for an electrical signal, on which the program according to Claim 10 is recorded.
